# EUROPÄISCHE PATENTSCHRIFT

(11) **EP 3 927 653 B1**
(45) Veröffentlichungstag und Bekanntmachung des Hinweises auf die Patenterteilung: **03.05.2023**
(21) Anmeldenummer: 20705965.0
(22) Anmeldetag: 18.02.2020
(51) Int. Cl.: C01B 3/04, C01B 3/12, C01B 3/50, C10J 3/00, C10J 3/20, C10K 3/04, F01K 23/06

(54) **SYSTEM UND VERFAHREN ZUR SPEICHERUNG VON AUS KOHLE GEWONNENEM WASSERSTOFF**
SYSTEM AND METHOD FOR STORING HYDROGEN EXTRACTED FROM COAL
SYSTÈME ET PROCÉDÉ D'ACCUMULATION D'HYDROGÈNE OBTENU À PARTIR DE CHARBON

(30) Priorität: 19.02.2019 DE 102019104184
(43) Veröffentlichungstag der Anmeldung: 29.12.2021
(73) Patentinhaber: BLANK, Christian, 85452 Moosinning (DE)
(72) Erfinder: BLANK, Christian, 85452 Moosinning (DE)
(74) Vertreter: Prinz & Partner mbB
(86) Internationale Anmeldenummer: PCT/EP2020/054249
(87) Internationale Veröffentlichungsnummer: WO 2020/169610

(56) Entgegenhaltungen:
- DE-A1-102016 003 927
- KR-A- 20140 133 260
- US-A1- 2013 252 115

## Beschreibung

Die Erfindung betrifft ein System zur Speicherung von aus Kohle gewonnenem Wasserstoff. Ferner betrifft die Erfindung ein Verfahren zur Speicherung von aus Kohle gewonnenem Wasserstoff.

Im Hinblick auf einen künftigen verstärkten Bedarf an Wasserstoff, gerade im Mobilitätsbereich, und dem Ziel einer Energiewende aus regenerativen Ausgangsmaterialen bei gleichzeitigem fortschreitenden Ausbau der regenerativen Stromproduktion stellt die Speicherung von Wasserstoff zur weiteren Verwendung eine große Herausforderung der nächsten Jahre dar.

Aus der US 2011/0243802 A1 ist ein Verfahren zur Speicherung von aus organischem Material gewonnenem Wasserstoff bekannt, bei dem organisches Material vergast wird, dessen Abwärme zur Trocknung des organischen Materials verwendet wird. Ferner ist ein Plasmavergasungsreaktor angeschlossen, der sehr viel Energie benötigt, sodass die gewonnene Energie größtenteils zum Betrieb des Plasmavergasungsreaktors und zur anschließenden aktiven Kühlung des Synthesegases verwendet wird, das aufgrund des Plasmas mehrere Tausend Grad Celsius heiß ist.

Des Weiteren lassen sich in Plasmavergasungsreaktoren vorzugsweise vorbehandelte, nämlich getrocknete Biomasse bzw. organisches Material, verarbeiten, was gerade bei organischem Material schwierig ist, da dieses zunächst unter hohem Energieaufwand getrocknet werden muss.

Zudem sind Plasmavergasungsreaktoren sehr wartungsanfällig, da die Elektroden regelmäßig gewechselt werden müssen.

Aus der US 2011/0062722 A1 ist ein System zur Speicherung von aus Kohle gewonnenem Wasserstoff bekannt, das unter anderem einen Vergasungsreaktor und eine Wassergas-Shift-Reaktionsanlage umfasst. Vor der Wassergas-Shift-Reaktionsanlage ist ein Wärmetauscher vorgesehen, über den Dampf erzeugt werden kann, welcher zur Erzeugung von überhitztem Dampf genutzt wird, der dann dem Vergasungsreaktor zugeführt wird.

Aus der DE102016003927 ist ein Kombinationskraftwerk zur Energiegewinnung aus Kohle bekannt, das unter anderem einen Kohlevergasungsreaktor, eine Anlage zur Wassergas-Shift-Reaktion und einen Wasserstoffmotor mit gekoppeltem Stromgenerator umfasst.

Der Erfindung liegt die Aufgabe zugrunde, sowohl regenerativ als auch konventionell hergestellten Wasserstoff in effizienter Weise zu speichern.

Erfindungsgemäß wird die Aufgabe gelöst durch ein System zur Speicherung von aus Kohle gewonnenem Wasserstoff, umfassend einen Kohlevergasungsreaktor zur Vergasung der Kohle, ein Dampfkraftwerk zur Stromproduktion, das thermisch mit dem Kohlevergasungsreaktor gekoppelt ist, eine Wassergas-Shift-Reaktionsanlage, die mit dem Kohlevergasungsreaktor verbunden ist, um die Reaktionsgase des Kohlevergasungsreaktors zu erhalten, eine mit einem Ausgang der Wassergas-Shift-Reaktionsanlage gekoppelte Ableitung, die mit einer Speisewasserleitung des Dampfkraftwerks thermisch gekoppelt ist und einen Gasspeicher, wobei der Gasspeicher mit der Wassergas-Shift-Reaktionsanlage verbunden ist, um wenigstens eines der Produktgase der Wassergas-Shift-Reaktionsanlage zu speichern, wobei das Dampfkraftwerk zur Stromproduktion mit dem Kohlevergasungsreaktor derart thermisch gekoppelt ist, dass die Reaktionsgase des Kohlevergasungsreaktors aufgrund der abgeleiteten Wärme an das Speisewasser einer Speisewasserleitung des Dampfkraftwerks ausreichend gekühlt sind, sodass die Reaktionsgase direkt in der Wassergas-Shift-Reaktionsanlage ohne zwischengeschaltete aktive Kühlung prozessierbar sind.

Ferner wird die Aufgabe erfindungsgemäß gelöst durch ein Verfahren zur Speicherung von aus Kohle gewonnenem Wasserstoff, mit einem System nach einem der vorhergehenden Ansprüche, mit den folgenden Schritten:
- Vergasen der Kohle im Kohlevergasungsreaktor mit Wasser und (Luft- )Sauerstoff,
- Ableiten der beim Vergasen entstehenden Reaktionswärme, um einen Wasserkessel des Dampfkraftwerks zu erhitzen, wobei die beim Vergasen entstehenden Reaktionsgase das Speisewasser des Wasserkessels des Dampfkraftwerks zur Produktion von elektrischem Strom erhitzen, wodurch die Reaktionsgase aufgrund der abgeleiteten Wärme auf eine Temperatur abgekühlt werden, die für die Wassergas-Shift-Reaktion benötigt wird,
- Produzieren von Strom im Dampfkraftwerk,
- Weiterleiten der bei der Vergasung entstehenden Reaktionsgase an die Wassergas-Shift-Reaktionsanlage,
- Durchführen einer Wassergas-Shift-Reaktion in der Wassergas-Shift-Reaktionsanlage, indem der Wassergas-Shift-Reaktionsanlage neben der bei der Vergasung entstehenden Reaktionsgase zusätzlich Wasser zugeführt wird, wobei die Reaktionsgase des Kohlevergasungsreaktors aufgrund der abgeleiteten Wärme an das Speisewasser einer Speisewasserleitung des Dampfkraftwerks ausreichend gekühlt worden sind, sodass die Reaktionsgase ohne zwischengeschaltete aktive Kühlung direkt in der Wassergas-Shift-Reaktionsanlage prozessiert werden,
- Weiterleiten der bei der Wassergas-Shift-Reaktion entstehenden Produktgase, wobei die weitergeleiteten Produktgase Speisewasser innerhalb einer Speisewasserleitung des Dampfkraftwerks erwärmen, sodass die Abwärme der durch die Wassergas-Shift-Reaktion entstehenden Produktgase genutzt wird, und
- Speichern wenigstens eines der Produktgase in dem Gasspeicher.

Das System und das Verfahren gemäß der Erfindung haben den Vorteil gegenüber herkömmlichen Dampfkraftwerken, dass die Speicherung von Wasserstoff anstelle der vollständigen Verstromung in einer künftigen Wasserstoffwirtschaft kostengünstig als Nebenprodukt eines Dampfkraftwerks möglich wird. Den Hauptbestandteil des Systems bilden ein Kohlevergasungsreaktor, ein damit thermisch gekoppeltes Dampfkraftwerk, eine Wassergas-Shift-Reaktionsanlage, eine thermische Koppelung der Wassergas-Shift-Reaktionsanlage mit dem Dampfkraftwerk und ein Gasspeicher, die entsprechend zusammenwirken.

In dem Kohlevergasungsreaktor entsteht idealtypisch hauptsächlich Kohlenmonoxid und Wasserstoff durch schnelle Oxidation im Kohlevergasungsreaktor als Reaktionsgase. Die Reaktionsgase der Vergasung haben eine Temperatur von beispielsweise 1300 bis 1800°C, insbesondere 1300 bis 1500°C bzw. 1500 bis 1800°C, was viel zu hoch ist für eine anschließende Wasserstoff-Shift-Reaktion.

Erfindungsgemäß erhitzen die Reaktionsgase das Speisewasser des Wasserkessels des Dampfkraftwerks zur Produktion von elektrischem Strom, beispielsweise wird Dampf mit einer Temperatur von ca. 530°C erzeugt, wodurch die Reaktionsgase gekühlt werden, insbesondere auf unter 700°C, vorzugsweise auf 200°C bis 500°C.

Hierdurch ist es überhaupt erst möglich, dass die Reaktionsgase in der Wassergas-Shift-Reaktionsanlage verarbeitet werden können, um spontan weiteren Wasserstoff als Produktgase zu erzeugen. Die Wassergas-Shift-Reaktion läuft insbesondere unter Zugabe von Wasser in Dampfform ab, also durch Zugabe von Wasserdampf.

Mit anderen Worten stellt das thermisch gekoppelte Dampfkraftwerk sicher, dass die Reaktionsgase des Kohlevergasungsreaktors ausreichend gekühlt werden, sodass die Wassergas-Shift-Reaktion überhaupt ablaufen kann. Es wird jedoch keine aktive Kühlung vorgenommen, bei der Energie zur Kühlung verbraucht wird, sondern die Wärme der Reaktionsgase wird genutzt, um das Dampfkraftwerk zumindest teilweise zu betreiben, also Dampf für das Dampfkraftwerk zu erzeugen.

Der Kohlevergasungsreaktor wird dagegen bei sehr hohen Temperaturen betrieben, sodass dieser fast ausschließlich Wasserstoff und Kohlenmonoxid als Reaktionsgase bereitstellt, beispielsweise 33% Wasserstoff und 60% Kohlenmonoxid. Im Stand der Technik wird ein Kohlevergasungsreaktor üblicherweise bei geringeren Temperaturen betrieben, beispielsweise auf Temperaturen von maximal 1000°C bis 1200°C, um die Reaktionsgase anschließend weniger stark aktiv abkühlen zu müssen, sodass die Gesamteffizienz möglichst hoch ist.

Allerdings entstehen bei derartigen Temperaturen, die im Stand der Technik vorgesehen sind, Dioxide, was erfindungsgemäß vermieden werden soll.

Aufgrund der hohen Temperaturen liegt erfindungsgemäß eine schnelle Oxidation der zugeführten Kohle vor.

Das entstehende Kohlenmonoxid als Teil der abgekühlten Reaktionsgase des Kohlevergasungsreaktors wird über die Wassergas-Shift-Reaktionsanlage in Wasserstoff umgesetzt. Insofern steht weiterer Wasserstoff zur Verfügung, der genutzt werden kann. Der weitere Wasserstoff stellt dabei einen Teil der Produktgase der Wassergas-Shift-Reaktionsanlage dar.

Die Wassergas-Shift-Reaktionsanlage kann zudem einen Hochtemperatur- und Niedertemperatur-Anlagenteil umfassen, wodurch sich der Kohlenmonoxid-Anteil in den Produktionsgasen der Wassergas-Shift-Reaktionsanlage reduzieren lässt.

Letztlich werden die Produktgase der Wassergas-Shift-Reaktionsanlage, also hauptsächlich Wasserstoff, in einem Gasspeicher gespeichert. Der Wasserstoff kann unter anderem für Wasserstoffautos oder andere Wasserstoffanwendungen genutzt werden.

Zuvor werden die Produktgase der Wassergas-Shift-Reaktion, also die von der Wassergas-Shift-Reaktionsanlage abgehenden Gase, genutzt, um das Speisewasser des Dampfkraftwerks weiter zu erwärmen. Die Produktgase weisen weiterhin eine Temperatur auf, die höher ist als diejenige des Speisewassers, also beispielsweise oberhalb von ca. 530°C, insbesondere im Bereich von 700°C.

Grundsätzlich kann der im Kohlvergasungsreaktor entstehende Wasserstoff abgeschieden werden, beispielsweise über einen nachgeschalteten Filter, sodass der Wassergas-Shift-Reaktionsanlage nur der gekühlte Kohlenmonoxid als (gekühltes) Reaktionsgas zugeführt wird.

Anschließend kann der im Kohlvergasungsreaktor entstandene Wasserstoff, also der Wasserstoff als Reaktionsgas, mit dem Wasserstoff aus der Wassergas-Shift-Reaktionsanlage, also der Wasserstoff als Produktgas, zusammengeführt und im Gasspeicher gespeichert werden. Der Anteil des gewonnenen Wasserstoffs ist somit maximal.

Alternativ wird der im Kohlvergasungsreaktor entstehende Wasserstoff ebenfalls der Wassergas-Shift-Reaktionsanlage und hierüber dem Gasspeicher zugeführt.

Das System produziert unter anderem aufgrund des angeschlossenen Dampfkraftwerks immer einen Stromüberschuss, der in das Netz eingespeist werden kann. Im Gegensatz hierzu benötigen Systeme mit Plasmavergasungsreaktoren zumindest einen Großteil des Stroms zum Eigenbetrieb. Ein etwaiger Überschuss wird jedoch spätestens zur Wasserstoffproduktion benötigt, also direkt wieder verbraucht.

Die Wassergas-Shift-Reaktionsanlage weist eine Ableitung auf, über die die Produktionsgase von der Wassergas-Shift-Reaktionsanlage weggeführt werden. Der Ausgang ist mit einer hiervon abgehenden Ableitung gekoppelt, über die die Produktionsgase unter anderem zum Gasspeicher geführt werden. Die Ableitung kann dabei thermisch mit zumindest einer Speisewasserleitung des Dampfkraftwerks, insbesondere einem Wasserkessel des Dampfkraftwerks, thermisch gekoppelt sein, sodass das Speisewasser erwärmt wird.

Grundsätzlich bedeutet dies also, dass die Temperatur der Reaktionsgase aufgrund der thermischen Kopplung so weit reduziert wird, dass diese in der Wassergas-Shift-Reaktionsanlage direkt prozessiert werden können.

Hierzu liegt sowohl vor als auch nach der Wassergas-Shift-Reaktionsanlage eine thermische Kopplung mit dem Speisewasser des Dampfkraftwerks vor.

Ein Aspekt sieht eine Abtrennungsanlage zur Abtrennung von Wasserstoff vor, die zwischen der Wassergas-Shift-Reaktionsanlage und dem Gasspeicher angeordnet ist, sodass der Gasspeicher nur Wasserstoff speichert. Insofern wird mittels einer weiteren Teilanlage, nämlich der Abtrennungsanlage, der Wasserstoff von den restlichen Produktgasen der Wassergas-Shift-Reaktionsanlage getrennt und dann im Gasspeicher gespeichert, sodass reiner Wasserstoff zur Verfügung steht. Bei der Abtrennungsanlage kann es sich um einen Filter handeln. Die weiteren Produktgase können ebenfalls abgetrennt bzw. gefiltert werden, sodass sie ebenfalls separat gespeichert werden können.

Gemäß einem weiteren Aspekt ist eine Karbonisierungsanlage zur kontinuierlichen oder zur diskontinuierlichen hydrothermalen Karbonisierung von Biomasse vorgesehen, wobei der Karbonisierungsanlage als Ausgangsmaterial eine beliebige Biomasse zugeführt wird, die in einem Durchlaufverfahren einer kontinuierlichen oder in einem Batchverfahren einer diskontinuierlichen hydrothermalen Karbonisierung unterworfen wird, insbesondere wobei die bei der Karbonisierung freiwerdende Reaktionswärme zur Trocknung des entstehenden Kohle-Wasser-Slurry verwendet wird. Insofern ist ein regenerativer Betrieb möglich, bei dem eine beliebige Biomasse in einem vorgelagertem Anlagenteil in einem kontinuierlichen Durchlaufverfahren oder einem diskontinuierlichen Batchverfahren einer hydrothermalen Karbonisierung unterzogen wird. Je nach verwendetem Vergasungsreaktor kann die dabei entstehende Kohle mit der Reaktionswärme aus der hydrothermalen Karbonisierung vor der Vergasung getrocknet werden.

Die Karbonisierungsanlage kann einen Karbonisierungsteil, einen an den Karbonisierungsteil anschließenden Trocknungsteil und einen Wärmetauscher umfassen, wobei der Wärmetauscher die beim Karbonisieren im Karbonisierungsteil freiwerdende Reaktionswärme zum Trocknungsteil leitet. Hierdurch ist eine energieeffiziente Karbonisierungsanlage geschaffen, da die beim Karbonisieren der Biomasse freiwerdende Reaktionswärme zur Trocknung der beim Karbonisieren entstehenden Kohle genutzt wird, sodass dem Kohlevergasungsreaktor getrocknete Kohle zugeführt werden kann.

Grundsätzlich kann in der Karbonisierungsanlage beliebige Biomasse, sogar sehr feuchte wie Biomüll, ohne Vorbehandlung verwendet werden, um mittels hydrothermaler Karbonisierung den Kohle-Wasser-Slurry herzustellen, der auch als Braunkohle-Wasser-Slurry bzw. HTC-Kohle bezeichnet wird. Der Stromverbrauch hierbei ist minimal.

Generell kann das Dampfkraftwerk als Wärmesenke dienen, sodass die Wassergas-Shift-Reaktionsanlage die Reaktionsgase des Kohlevergasungsreaktors gekühlt erhält. Die Reaktionsgase werden also aufgrund der abgeleiteten Wärme auf die Temperatur abgekühlt, die für die Wassergas-Shift-Reaktion benötigt wird. Da die Kühlung der Reaktionsgase bzw. das Ableiten der entstandenen Wärme genutzt wird, um das im Wasserkessel des Dampfkraftwerks vorhandene Wasser zu erwärmen und Dampf zu erzeugen, gibt sich ein entsprechend energieeffizientes System.

Zudem kann eine Brennstoffzelle vorgesehen sein, die mit der Wassergas-Shift-Reaktionsanlage und/oder dem Gasspeicher verbunden ist, um wenigstens eines der Produktgase zu erhalten und zu verbrauchen, insbesondere wobei die Brennstoffzelle eine Hochtemperatur-Brennstoffzelle ist. Die Brennstoffzelle kann den Wasserstoff erhalten und diesen in elektrische Energie umwandeln, also in Strom. Insofern handelt es sich bei der Brennstoffzelle um eine Wasserstoff-Brennstoffzelle, beispielsweise eine Wasserstoff-Sauerstoff-Brennstoffzelle.

Es kann zumindest eines der Produktgase einer Brennstoffzelle zugeführt werden, insbesondere einer Hochtemperatur-Brennstoffzelle. Hierbei kann es sich um ein Produktgas handeln, das direkt aus der Wassergas-Shift-Reaktionsanlage der Brennstoffzelle zugeführt wird. Alternativ oder ergänzend kann das Produktionsgas aus dem Gasspeicher der Brennstoffzelle zugeführt werden, also zuvor zwischengespeichert worden sein.

Insbesondere weist die Brennstoffzelle eine Ableitung auf, die mit einer Speisewasserleitung des Dampfkraftwerks thermisch gekoppelt ist. Die von der Brennstoffzelle entstehende Abwärme kann also ebenfalls genutzt werden, um das Speisewasser zu erwärmen. Bei der Speisewasserleitung des Dampfkraftwerks kann es sich um die Speisewasserleitung handeln, mit der auch die Ableitung der Wassergas-Shift-Reaktionsanlage thermisch gekoppelt ist. Alternativ kann eine andere Speisewasserleitung des Dampfkraftwerks mit der Ableitung der Brennstoffzelle gekoppelt sein.

Die Abwärme der Brennstoffzelle kann genutzt werden, um Speisewasser innerhalb einer Speisewasserleitung des Dampfkraftwerks zu erwärmen. Bei der Umsetzung des zugeführten Produktionsgases, insbesondere des Wasserstoffes, produziert die Brennstoffzelle Wärme (Abwärme), die ebenfalls genutzt werden kann, um das Speisewasser des Dampfkraftwerks zu erwärmen.

Bei dem Kohlevergasungsreaktor kann es sich um einen Koppers-Totzek-Reaktor handeln. Ein derartiger Kohlevergasungsreaktor arbeitet mit Feinkohle, der mit unterschiedlichen Arten von Kohle arbeiten kann.

Die Kohle kann vorab auf die benötigte Körnung zerkleinert werden. Je nach verwendetem Vergasungsreaktor, beispielsweise bei einem Koppers-Totzek-Reaktor, muss die Kohle in einem vorgelagertem Anlagenteil zu einer gewissen Körnigkeit zerkleinert werden.

Die HTC-Kohle, also das aus der Karbonisierungsanlage erhaltene Kohle-Wasser-Slurry, muss vor der anschließenden Vergasung nicht zerkleinert werden, da sie in der Größe 8 bis 20 nm vorliegt, da ein Kopper-Totzek-Reaktor beispielsweise eine Körnung von kleiner als 0,1 mm benötigt.

Die Reaktionsgase der Vergasung können hauptsächlich Kohlenmonoxid umfassen, insbesondere wobei die Reaktionsgase unter anderem Wasserstoff umfassen.

Ein weiterer Aspekt sieht vor, dass die bei der Wassergas-Shift-Reaktion entstehenden Produktgase mittels einer vorgelagerten Abtrennungsanlage zur Abtrennung von Wasserstoff prozessiert werden, sodass nur Wasserstoff dem Gasspeicher zugeführt wird.

Beispielsweise wird die Kohle aus fossiler Kohle und/oder aus einer beliebigen Biomasse bereitgestellt. Die Kohle kann also vollständig aus fossiler Kohle, vollständig aus einer beliebigen Biomasse oder gar aus einer Mischung bereitgestellt werden. Sofern ein Anteil von Biomasse vorgesehen ist, so muss diese zuvor entsprechend karbonisiert werden.

Die zerkleinerte Kohle, der aus Biomasse entstandene Braunkohle-Wasser-Slurry und/oder der getrocknete Braunkohle-Wasser-Slurry können bzw. kann generell in dem Kohlevergasungsreaktor mit Wasser und (Luft-)Sauerstoff vergast werden.

Da das System ein Dampfkraftwerk umfasst, handelt es sich bei dem System um ein stationäres, immobiles bzw. ortsfestes System.

Generell erfolgt die Vergasung der Kohle im Kohlevergasungsreaktor durch Zugabe von Wasser und Sauerstoff mit hoher Geschwindigkeit, sodass die Kohle nur kurzzeitig einer Flamme im Kohlevergasungsreaktor ausgesetzt ist, also nicht vollständig verbrennt.

Im Gegensatz zum erfindungsgemäßen System, bei dem im Vergasungsprozess fast ausschließlich elementarer Wasserstoff und Kohlenmonoxid entsteht, nämlich zu über 90%, beispielsweise 93%, entstehen bei der Plasmavergasung Atome und je nach Abkühlungsart verschiedene, auch giftige, Moleküle, unter anderem Schwermetalle, die gesondert gefiltert werden müssen, was das System entsprechend teurer gestaltet.

Bei den Plasmaverfahren wird der Biomüll als Biomasse zunächst unter hoher Energiezufuhr getrocknet und anschließend in atomare Elemente zerlegt. Diese können beim Abkühlen wieder giftige Verbindungen bilden, die dann bei der Verbrennung des Produktgases entweichen könnten. Um solche Verbindungen zu vermeiden, werden die heißen Gase sehr schnell aktiv abgekühlt, um die zur Entstehung von Verbindungen wie Furanen und Dioxinen notwendigen äußeren Bedingungen zu verhindern.

Grundsätzlich kann das Dampfkraftwerk an einen Kühlwassermantel und zusätzlich mit einer Reaktionsgasableitung des Kohlevergasungsreaktors thermisch gekoppelt sein, über die die Reaktionsgase des Kohlevergasungsreaktors abgeführt werden.

Weitere Vorteile und Eigenschaften der Erfindung ergeben sich aus der nachfolgenden Beschreibung und den Zeichnungen, auf die Bezug genommen wird. In den Zeichnungen zeigen:

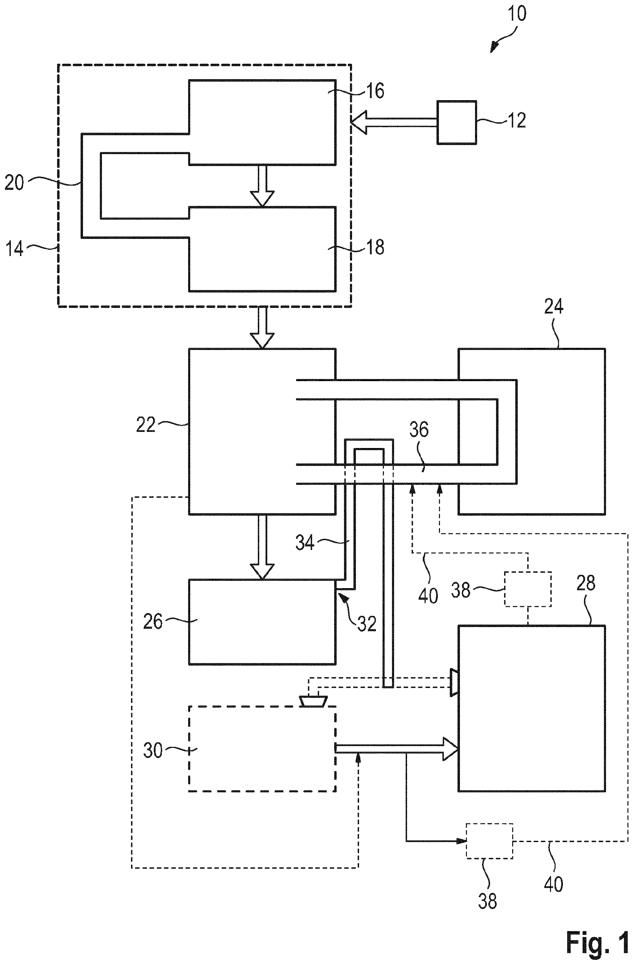

- Figur 1 einen schematischen Aufbau des erfindungsgemäßen Systems zur Speicherung von aus Kohle gewonnenem Wasserstoff, mit dem das erfindungsgemäße Verfahren durchgeführt werden kann.

In Figur 1 ist ein System 10 gezeigt, das Wasserstoff aus einer Biomasse erzeugen kann.

Das System 10 umfasst hierzu eine Biomassenzufuhr 12, über die einer Karbonisierungsanlage 14 die zu karbonisierende Biomasse zugeführt werden kann. Die Karbonisierungsanlage 14, die Teil des Systems 10 ist, dient zur kontinuierlichen oder zur diskontinuierlichen hydrothermalen Karbonisierung der Biomasse, um Kohle zu erzeugen.

Hierzu umfasst die Karbonisierungsanlage 14 einen Karbonisierungsteil 16, einen an den Karbonisierungsteil 16 anschließenden Trocknungsteil 18 und einen Wärmetauscher 20, der den Karbonisierungsteil 16 mit dem Trocknungsteil 18 koppelt.

Ferner umfasst das System 10 einen Kohlevergasungsreaktor 22, der mit der Karbonisierungsanlage 14 gekoppelt ist, um die Ausgangsprodukte der Karbonisierungsanlage 14 zu erhalten.

Der Kohlevergasungsreaktor 22 vergast die Kohle, also unter anderem die Ausgangsprodukte der Karbonisierungsanlage 14, wobei die Kohle unter Zugabe von Wasser und (Luft-)Sauerstoff unter anderem zu Kohlenmonoxid und Wasserstoff vergast wird. Hierbei entsteht thermische Energie, die genutzt werden kann.

Erfindungsgemäß wird die thermische Energie von einem Dampfkraftwerk 24 genutzt, das thermisch mit dem Kohlevergasungsreaktor 22 gekoppelt ist, sodass Speisewasser eines Wasserkessels des Dampfkraftwerks 24 durch die bei der Vergasung entstehenden Wärme erwärmt wird.

Des Weiteren umfasst das System 10 eine Wassergas-Shift-Reaktionsanlage 26, die mit dem Kohlevergasungsreaktor 22 gekoppelt ist, um die Reaktionsgase des Kohlevergasungsreaktors 22 zu erhalten, die aufgrund der thermischen Koppelung mit dem Dampfkraftwerk 24 gekühlt sind.

In der Wassergas-Shift-Reaktionsanlage 26 wird das als Reaktionsgas von dem Kohlevergasungsreaktor 22 erhaltende Kohlenmonoxid unter Zugabe von Wasser zu weiterem Wasserstoff umgewandelt.

An die Wassergas-Shift-Reaktionsanlage 26 schließt sich unter anderem (direkt oder indirekt) ein Gasspeicher 28 an, in dem zumindest eines der Produktgase der Wassergas-Shift-Reaktionsanlage 26 gespeichert werden kann.

Insbesondere kann es sich bei dem einen Produktionsgas um Wasserstoff handeln, weswegen eine Abtrennungsanlage 30 zur Abtrennung von Wasserstoff (optional) vorgesehen ist, die zwischen der Wassergas-Shift-Reaktionsanlage 26 und dem Gasspeicher 28 angeordnet ist, sodass der Gasspeicher 28 nur Wasserstoff speichert.

Von der Wassergas-Shift-Reaktionsanlage 26 gehen Produktionsgase über einen Ausgang 32 ab, der mit einer Ableitung 34 gekoppelt ist, die wiederum mit einer Speisewasserleitung 36 des Dampfkraftwerks 24 thermisch gekoppelt ist.

In Figur 1 handelt es sich bei der Speisewasserleitung 36 um die Speisewasserleitung, mit der auch der Kohlevergasungsreaktor 22 thermisch gekoppelt ist.

Die Produktionsgase können dann aus der Ableitung 34 entweder direkt dem Gasspeicher 28 oder über die Abtrennungsanlage 30 dem Gasspeicher 28 zugeführt werden, wie aus den gestrichelten Leitungen in Figur 1 deutlich wird.

Darüber hinaus kann eine Brennstoffzelle 38 vorgesehen sein, die mit der Wassergas-Shift-Reaktionsanlage 26 verbunden ist, um ein entsprechendes Produktionsgas der Wassergas-Shift-Reaktionsanlage 26 zu erhalten, beispielsweise Wasserstoff.

Insbesondere ist die Brennstoffzelle 38 indirekt über die vorgeschaltete Abtrennungsanlage 30 mit der Wassergas-Shift-Reaktionsanlage 26 verbunden, wodurch sichergestellt ist, dass die Brennstoffzelle 38 ausschließlich Wasserstoff erhält.

Das zu speichernde Produktionsgas wird dann nur teilweise gespeichert, da ein Teil des Produktionsgases direkt für die Erzeugung elektrischer Energie vorgesehen wird, indem es der Brennstoffzelle 38 zugeführt wird.

Bei der Brennstoffzelle 38 kann es sich um eine Hochtemperatur-Brennstoffzelle handeln, die das jeweilige Produktionsgas bei hohen Temperaturen verarbeitet und bei der Stromproduktion eine entsprechende Abwärme erzeugt, die wiederum genutzt werden kann, um das Speisewasser des Dampfkraftwerks 24 zu erwärmen.

Hierzu kann auch die Brennstoffzelle 38 eine Ableitung 40 aufweisen, die mit der Speisewasserleitung 36 des Dampfkraftwerks 24 thermisch gekoppelt ist. Aus Gründen der Einfachheit ist die Ableitung 40 der Brennstoffzelle 38 ebenfalls mit der Speisewasserleitung 36 thermisch gekoppelt, mit der auch die Wassergas-Shift-Reaktionsanlage 26 über ihre Ableitung 34 und der Kohlevergasungsreaktor 22 thermisch gekoppelt sind.

Auch kann die Brennstoffzelle 38 mit dem Gasspeicher 28 verbunden sein, sodass das zwischengespeicherte Produktionsgas, beispielsweise Wasserstoff, der Brennstoffzelle 38 zur Verfügung gestellt wird.

Grundsätzlich kann die thermische Anbindung des Dampfkraftwerks 24 an die Brennstoffzelle 38, die Wassergas-Shift-Reaktionsanlage 26 sowie den Kohlevergasungsreaktor 22 jedoch an unterschiedlichen Stellen erfolgen, also mit unterschiedlichen Speisewasserleitungen.

In der Ausführungsform gemäß Figur 1 ist es somit möglich, Wasserstoff aus Biomasse zu erhalten und gleichzeitig Strom zu produzieren, wobei die Effizienz entsprechend hoch ist.

Wie bereits erläutert wird der Karbonisierungsanlage 14 über die Biomassenzufuhr 12 Biomasse zugeführt, die dann in dem Karbonisierungsteil 16 karbonisiert wird, also zur Kohle umgewandelt wird.

Die Biomasse kann dabei anfänglich beheizt werden, um dann mittels einer exothermer Reaktion in einen Kohle-Wasser-Slurry umgewandelt zu werden, insbesondere einem Braunkohle-Wasser-Slurry.

Die dabei freiwerdende Wärme wird über den integrierten Wärmetauscher 20 der Karbonisierungsanlage 14 zum anschließenden Trocknungsteil 18 geleitet, der zur Trocknung des Kohle-Wasser-Slurry dient. Mit anderen Worten dient der Wärmetauscher 20 als Wärmekopplung, sodass der Trocknungsteil 18 die bei der exothermen Reaktion der Karbonisierung freigewordene Wärme zur Trocknung des Kohle-Wasser-Slurrys verwendet.

Der getrocknete Kohle-Wasser-Slurry wird dann dem Kohlevergasungsreaktor 22 zugeführt, wobei die Kohle zusammen mit Wasser und (Luft-)Sauerstoff unter Energieabgabe unter anderem zu Kohlenmonoxid und Wasserstoff vergast wird.

Die Karbonisierungsanlage 14 ist lediglich optional, sofern Wasserstoff aus Biomasse gewonnen werden soll.

Es kann auch fossile Kohle dem Kohlevergasungsreaktor 22 direkt zugeführt werden, die dann unter Energieabgabe unter anderem zu Kohlenmonoxid und Wasserstoff vergast wird.

Ferner kann eine Mischung aus Biomasse und fossiler Kohle dem Kohlevergasungsreaktor 22 zugeführt werden.

In jedem Fall wird der Kohlevergasungsreaktor 22 bei derart hohen Temperaturen betrieben, das fast ausschließlich Kohlenmonoxid und Wasserstoff entsteht. Dies geschieht durch schnelle Oxidation bei hohen Temperaturen, bei der hauptsächlich Kohlenmonoxid und Wasserstoff als Reaktionsgase entstehen.

Bei dem Kohlevergasungsreaktor 22 kann es sich um einen Koppers-Totzek-Reaktor handeln, der zerkleinerte Kohle für die Vergasung benötigt, sodass eine Zerkleinerungsanlage vorgeschaltet sein kann, die die Kohle zerkleinert, insbesondere die fossile Kohle.

Das in der Karbonisierungsanlage 14 entstandene Kohle-Wasser-Slurry muss dagegen nicht noch weiter zerkleinert werden, da die Kohle bereits ausreichend zerkleinert ist.

Bei dem Kohlevergasungsreaktor 22 kann demnach die Kohle bei Temperaturen von 1300 bis 1800 °C, insbesondere 1300 bis 1500°C bzw. 1500 bis 1800°C, in einer Flamme des Kohlevergasungsreaktors 22 vergast werden, wobei Wasserstoff und Kohlenmonoxid (Generatorgas) erzeugt wird.

Das Kohlenmonoxid (Generatorgas) wird entsprechend durch unvollständige Verbrennung von Kohle mit Luft erzeugt, was beispielsweise bei einer Plasmaverbrennung gerade nicht möglich ist, zumal noch ein Arbeitsgas verwendet werden muss.

Die Wärmeenergie der Reaktionsgase wird dem thermisch mit dem Kohlevergasungsreaktor 22 gekoppelten Dampfkraftwerk 24 zugeleitet bzw. von diesem entnommen, insbesondere dem Wasserkessel des Dampfkraftwerks 24, beispielsweise über die Speisewasserleitung 36. Das darin befindliche Speisewasser wird aufgrund der Wärme der Reaktionsgase erhitzt, sodass das Speisewasser verdampft. Der Dampf kann dann eine oder mehrere Turbine(n) des Dampfkraftwerks 24 zur Stromproduktion antreiben.

Die Erhitzung des Speisewassers mit den Reaktionsgasen des Kohlevergasungsreaktor 22 kühlt die Reaktionsgase entsprechend ab, insbesondere das Kohlenmonoxid als Reaktionsgas. Beispielsweise werden die Reaktionsgase auf Temperaturen unterhalb von 700°C abgekühlt.

Hierdurch ist sichergestellt, dass die Reaktionsgase, insbesondere das Kohlenmonoxid, direkt in der Wassergas-Shift-Reaktionsanlage 26 prozessiert werden können, also ohne zwischengeschaltete aktive Kühlung, wie dies sonst üblich ist.

Mit anderen Worten dient das mit dem Kohlevergasungsreaktor 22 thermisch gekoppelte Dampfkraftwerk 24 als Wärmesenke, sodass die Wassergas-Shift-Reaktionsanlage 26 die Reaktionsgase des Kohlevergasungsreaktors 22 gekühlt erhält.

In der Wassergas-Shift-Reaktionsanlage 26 wird das Kohlenmonoxid, das neben Wasserstoff bei der Vergasung im Kohlevergasungsreaktor 22 als Reaktionsgas entstanden ist, zu weiterem Wasserstoff umgesetzt, sodass noch mehr Wasserstoff zur Verfügung gestellt werden kann.

Der zusätzliche Wasserstoff kann dann über die Abtrennungsanlage 30 zur Abtrennung abgetrennt werden, sodass der Gasspeicher 28 nur Wasserstoff erhält.

Insbesondere kann zuvor der Wasserstoff, der als Reaktionsgas im Kohlevergasungsreaktor 22 entstanden ist, ebenfalls zuvor abgetrennt worden sein, insbesondere vor der Weiterleitung der Reaktionsgase an die Wassergas-Shift-Reaktionsanlage 26, wobei der abgezweigte Wasserstoff mit dem zusätzlichen Wasserstoff zusammengeführt wird.

Anschließend werden der abgezweigte Wasserstoff zusammen mit dem zusätzlichen Wasserstoff im Gasspeicher 28 gespeichert.

Dem Gasspeicher 28 kann eine Kompressionsanlage vorgeschaltet sein, um das zu speichernde Gas zu komprimieren.

Zur Erhöhung der Effizienz werden die in der Wassergas-Shift-Reaktionsanlage 26 entstehenden Produktgase über die Ableitung 34 mit der Speisewasserleitung 36 thermisch gekoppelt, um das Speisewasser weiter zu erwärmen.

Die Produktgase weisen auch nach der Wassergas-Shift-Reaktionsanlage 26 noch eine höhere Temperatur als das Speisewasser auf, sodass dieses weiter erwärmt werden kann. Hierdurch lässt sich die Effizienz weiter steigen.

Beispielsweise sind die Produktionsgase, insbesondere das Kohlendioxid und der Wasserstoff, noch fast 700°C heiß, also wärmer als das Speisewasser des Dampfkraftwerks 24.

Zudem kann die Brennstoffzelle 38 des Systems 10 eingesetzt werden, um den Wirkungsgrad weiter zu erhöhen, da beispielsweise Wasserstoff in der Brennstoffzelle 38 umgesetzt wird, um elektrische Energie zu erzeugen.

Die dabei entstehende Abwärme kann wiederum genutzt werden, um das Speisewasser des Dampfkraftwerks 24 noch weiter zu erwärmen.

Grundsätzlich kann das System 10 aus der Kohle, die insbesondere aus Biomasse bereitgestellt wird, fast ausschließlich Wasserstoff und Kohlenmonoxid erzeugen, nämlich zu über 90%. Die dabei entstehende Asche fällt flüssig im Reaktorboden an und wird in einem Wasserbad granuliert.

Vereinfacht dargestellt erfolgt im Kohlevergasungsreaktor 22 folgende Reaktion C₆H₂O + 5 H₂O = 6 CO + 6 H₂.Das so gewonnene Kohlenmonoxid wird dann in der Wassergas-Shift-Reaktionsanlage 26 einer Wassergas-Shift-Reaktion unterzogen, die sich wie folgt darstellen lässt 6 CO + 6 H₂O = 6 CO₂ + 6 H₂. Hieraus wird deutlich, dass aus dem Kohlenmonoxid weiterer Wasserstoff gewonnen werden kann.

Es entstehen somit pro Kohlenstoffatom der HTC-Kohle zwei Moleküle Wasserstoff (H2).

Gerade die Kombination beider Verfahren (Vergasung und Wassergas-Shift-Reaktion) ermöglicht eine beinahe Verdopplung des produzierten Wasserstoffs gegenüber der reinen Vergasung oder der Plasmavergasung.

Zudem ist das gesamte Verfahren sehr energieeffizient, sodass zusätzlich noch Strom produziert werden kann, wohingegen bei Systemen mit Plasmavergasung keine überschüssige Energie anfällt, sofern der Wasserstoff gespeichert werden soll.

Sofern die Kohle aus Biomasse bereitgestellt wird, ergibt sich somit eine regenerative Strom- und Wasserstoffproduktion.

## Patentansprüche

1. System (10) zur Speicherung von aus Kohle gewonnenem Wasserstoff, umfassend:
- einen Kohlevergasungsreaktor (22) zur Vergasung der Kohle,
- ein Dampfkraftwerk (24) zur Stromproduktion, das thermisch mit dem Kohlevergasungsreaktor (22) gekoppelt ist,
- eine Wassergas-Shift-Reaktionsanlage (26), die mit dem Kohlevergasungsreaktor (22) verbunden ist, um die Reaktionsgase des Kohlevergasungsreaktors (22) zu erhalten,
- eine mit einem Ausgang (32) der Wassergas-Shift-Reaktionsanlage (26) gekoppelte Ableitung (34), die mit einer Speisewasserleitung (36) des Dampfkraftwerks (24) thermisch gekoppelt ist, und
- einen Gasspeicher (28), wobei der Gasspeicher (28) mit der Wassergas-Shift-Reaktionsanlage (26) verbunden ist, um wenigstens eines der Produktgase der Wassergas-Shift-Reaktionsanlage (26) zu speichern,
wobei das Dampfkraftwerk (24) zur Stromproduktion mit dem Kohlevergasungsreaktor (22) derart thermisch gekoppelt ist, dass die Reaktionsgase des Kohlevergasungsreaktors (22) aufgrund der abgeleiteten Wärme an das Speisewasser einer Speisewasserleitung des Dampfkraftwerks (24) ausreichend gekühlt sind, sodass die Reaktionsgase direkt in der Wassergas-Shift-Reaktionsanlage (26) ohne zwischengeschaltete aktive Kühlung prozessierbar sind.

2. System (10) nach Anspruch 1, **dadurch gekennzeichnet, dass** das System (10) eine Karbonisierungsanlage (14) zur kontinuierlichen oder zur diskontinuierlichen hydrothermalen Karbonisierung von Biomasse umfasst, um Kohle zu erzeugen, insbesondere wobei die Karbonisierungsanlage (14) einen Karbonisierungsteil (16), einen an den Karbonisierungsteil (16) anschließenden Trocknungsteil (18) und einen Wärmetauscher (20) umfasst, wobei der Wärmetauscher (20) die beim Karbonisieren im Karbonisierungsteil (16) freiwerdende Reaktionswärme zum Trocknungsteil (18) leitet.

3. System (10) nach einem der vorhergehenden Ansprüche, **dadurch gekennzeichnet, dass** das Dampfkraftwerk (24) an einen Kühlwassermantel und zusätzlich mit einer Reaktionsgasableitung des Kohlevergasungsreaktors (22) thermisch gekoppelt ist, die die Reaktionsgase des Kohlevergasungsreaktors (22) abführt.

4. System (10) nach einem der vorhergehenden Ansprüche, **dadurch gekennzeichnet, dass** eine Brennstoffzelle (38) vorgesehen ist, die mit der Wassergas-Shift-Reaktionsanlage (26) und/oder dem Gasspeicher (28) verbunden ist, um wenigstens eines der Produktgase zu erhalten und zu verbrauchen, insbesondere wobei die Brennstoffzelle (38) eine Hochtemperatur-Brennstoffzelle ist.

5. System (10) nach Anspruch 4, **dadurch gekennzeichnet, dass** die Brennstoffzelle (38) eine Ableitung (40) aufweist, die mit einer Speisewasserleitung (36) des Dampfkraftwerks (24) thermisch gekoppelt ist.

6. Verfahren zur Speicherung von aus Kohle gewonnenem Wasserstoff, mit einem System (10) nach einem der vorhergehenden Ansprüche, mit den folgenden Schritten:
- Vergasen der Kohle im Kohlevergasungsreaktor (22) mit Wasser und (Luft- )Sauerstoff,
- Ableiten der beim Vergasen entstehenden Reaktionswärme, um einen Wasserkessel des Dampfkraftwerks (24) zu erhitzen, wobei die beim Vergasen entstehenden Reaktionsgase das Speisewasser des Wasserkessels des Dampfkraftwerks (24) zur Produktion von elektrischem Strom erhitzen, wodurch die Reaktionsgase aufgrund der abgeleiteten Wärme auf eine Temperatur abgekühlt werden, die für die Wassergas-Shift-Reaktion benötigt wird,
- Produzieren von Strom im Dampfkraftwerk (24),
- Weiterleiten der bei der Vergasung entstehenden Reaktionsgase an die Wassergas-Shift-Reaktionsanlage (26),
- Durchführen einer Wassergas-Shift-Reaktion in der Wassergas-Shift-Reaktionsanlage (26), indem der Wassergas-Shift-Reaktionsanlage (26) neben der bei der Vergasung entstehenden Reaktionsgase zusätzlich Wasser zugeführt wird, wobei die Reaktionsgase des Kohlevergasungsreaktors (22) aufgrund der abgeleiteten Wärme an das Speisewasser einer Speisewasserleitung des Dampfkraftwerks (24) ausreichend gekühlt worden sind, sodass die Reaktionsgase ohne zwischengeschaltete aktive Kühlung direkt in der Wassergas-Shift-Reaktionsanlage (26) prozessiert werden,
- Weiterleiten der bei der Wassergas-Shift-Reaktion entstehenden Produktgase, wobei die weitergeleiteten Produktgase Speisewasser innerhalb einer Speisewasserleitung (36) des Dampfkraftwerks (24) erwärmen, sodass die Abwärme der durch die Wassergas-Shift-Reaktion entstehenden Produktgase genutzt wird, und
- Speichern wenigstens eines der Produktgase in dem Gasspeicher (28).

7. Verfahren nach Anspruch 6, **dadurch gekennzeichnet, dass** die Reaktionsgase der Vergasung hauptsächlich Kohlenmonoxid umfassen, insbesondere wobei die Reaktionsgase unter anderem Wasserstoff umfassen.

8. Verfahren nach Anspruch 6 oder 7, **dadurch gekennzeichnet, dass** die Kohle aus fossiler Kohle und/oder aus einer beliebigen Biomasse bereitgestellt wird.

9. Verfahren nach einem der Ansprüche 6 bis 8, **dadurch gekennzeichnet, dass** zumindest eines der Produktgase einer Brennstoffzelle (38), insbesondere einer Hochtemperatur-Brennstoffzelle, zugeführt wird, insbesondere wobei Abwärme der Brennstoffzelle (38) genutzt wird, um Speisewasser innerhalb einer Speisewasserleitung (36) des Dampfkraftwerks (24) zu erwärmen.

10. Verfahren nach Anspruch 9, **dadurch gekennzeichnet, dass** das System (10) eine Karbonisierungsanlage (14) zur kontinuierlichen oder zur diskontinuierlichen hydrothermalen Karbonisierung von Biomasse umfasst, wobei der Karbonisierungsanlage (14) als Ausgangsmaterial eine beliebige Biomasse zugeführt wird, die in einem Durchlaufverfahren einer kontinuierlichen oder in einem Batchverfahren einer diskontinuierlichen hydrothermalen Karbonisierung unterworfen wird, insbesondere wobei die bei der Karbonisierung freiwerdende Reaktionswärme zur Trocknung des entstehenden Kohle-Wasser-Slurry verwendet wird.

## Claims

1. A system (10) for storing hydrogen extracted from coal, comprising:
- a coal gasification reactor (22) for gasifying the coal;
- a steam power plant (24) for the generation of electricity, which is thermally coupled to the coal gasification reactor (22);
- a water-gas shift reaction unit (26), which is connected to the coal gasification reactor (22) to obtain the reaction gases of the coal gasification reactor (22);
- a discharge line (34) coupled to an outlet (32) of the water-gas shift reaction unit (26) and thermally coupled to a feed water pipe (36) of the steam power plant (24); and
- a gas storage (28), the gas storage (28) being connected to the water-gas shift reaction unit (26) to store at least one of the product gases of the water-gas shift reaction unit (26),
wherein the steam power plant (24) for the generation of electricity is thermally coupled to the coal gasification reactor (22) such that the reaction gases of the coal gasification reactor (22) are sufficiently cooled due to the heat dissipated to the feed water of a feed water pipe of the steam power plant (24) so that the reaction gases can be processed directly in the water-gas shift reaction unit (26) without an active cooling interposed.

2. The system (10) according to claim 1, **characterized in that** the system (10) comprises a carbonization plant (14) for continuous or for discontinuous hydrothermal carbonization of biomass in order to produce coal, in particular wherein the carbonization plant (14) comprises a carbonization section (16), a drying section (18) adjoining the carbonization section (16), and a heat exchanger (20), wherein the heat exchanger (20) conducts the reaction heat released during carbonization in the carbonization section (16) to the drying section (18).

3. The system (10) according to either of the preceding claims, **characterized in that** the steam power plant (24) is thermally coupled to a cooling water jacket and additionally to a reaction gas discharge line of the coal gasification reactor (22), which discharges the reaction gases of the coal gasification reactor (22).

4. The system (10) according to any of the preceding claims, **characterized in that** a fuel cell (38) is provided which is connected to the water-gas shift reaction unit (26) and/or the gas storage (28) in order to obtain and consume at least one of the product gases, in particular wherein the fuel cell (38) is a high temperature fuel cell.

5. The system (10) according to claim 4, **characterized in that** the fuel cell (38) includes a discharge line (40) that is thermally coupled to a feed water pipe (36) of the steam power plant (24).

6. A method of storing hydrogen extracted from coal, comprising a system (10) according to any of the preceding claims, comprising the steps of:
- gasifying the coal in the coal gasification reactor (22) with water and (atmospheric) oxygen;
- dissipating the reaction heat produced during gasification in order to heat a water boiler of the steam power plant (24), wherein the reaction gases produced during gasification heat the feed water of the water boiler of the steam power plant (24) for the production of electric power, whereby, due to the dissipated heat, the reaction gases are cooled down to a temperature required for the water-gas shift reaction;
- producing electricity in the steam power plant (24);
- transferring the reaction gases produced during gasification to the water-gas shift reaction unit (26);
- performing a water-gas shift reaction in the water-gas shift reaction unit (26) by additionally supplying water to the water-gas shift reaction unit (26) in addition to the reaction gases produced during gasification, wherein the reaction gases of the coal gasification reactor (22) have been sufficiently cooled due to the heat dissipated to the feed water of a feed water pipe of the steam power plant (24) so that the reaction gases are processed directly in the water-gas shift reaction unit (26) without an active cooling interposed;
- transferring the product gases produced in the water-gas shift reaction, the transferred product gases heating feed water within a feed water pipe (36) of the steam power plant (24) so that the waste heat of the product gases produced by the water-gas shift reaction is utilized; and
- storing at least one of the product gases in the gas storage (28).

7. The method according to claim 6, **characterized in that** the reaction gases of the gasification comprise mainly carbon monoxide, in particular wherein the reaction gases comprise, inter alia, hydrogen.

8. The method according to claim 6 or 7, **characterized in that** the coal is provided from fossil coal and/or from any biomass.

9. The method according to any of claims 6 to 8, **characterized in that** at least one of the product gases is supplied to a fuel cell (38), in particular a high temperature fuel cell, in particular wherein waste heat of the fuel cell (38) is utilized to heat feed water within a feed water pipe (36) of the steam power plant (24).

10. The method according to claim 9, **characterized in that** the system (10) comprises a carbonization plant (14) for continuous or for discontinuous hydrothermal carbonization of biomass, wherein the carbonization plant (14) is supplied with any desired biomass as starting material, which is subjected to a continuous hydrothermal carbonization in a continuous process or to a discontinuous hydrothermal carbonization in a batch process, in particular wherein the reaction heat released during carbonization is used for drying the resulting coal-water slurry.

## Revendications

1. Système (10) d'emmagasinage d'hydrogène extrait de charbon, comprenant:
- un réacteur de gazéification de charbon (22) pour la gazéification du charbon,
- une centrale thermique à vapeur (24) pour la production de courant qui est thermiquement couplée au réacteur de gazéification de charbon (22),
- une installation de réaction du gaz à l'eau (26) qui est reliée au réacteur de gazéification de charbon (22) pour obtenir les gaz de réaction du réacteur de gazéification de charbon (22),
- une conduite de dérivation (34) qui est couplée à une sortie (32) de l'installation de réaction du gaz à l'eau (26) et qui est thermiquement couplée à une conduite d'eau d'alimentation (36) de la centrale thermique à vapeur (24), et
- un accumulateur de gaz (28), l'accumulateur de gaz (28) étant relié à l'installation de réaction du gaz à l'eau (26) pour emmagasiner l'un des gaz de produit de l'installation de réaction du gaz à l'eau (26),
la centrale thermique à vapeur (24) pour la production de courant étant thermiquement couplée au réacteur de gazéification de charbon (22) de sorte que les gaz de réaction du réacteur de gazéification de charbon (22) sont suffisamment refroidis en raison de la chaleur dissipée vers l'eau d'alimentation d'une conduite d'eau d'alimentation de la centrale thermique à vapeur (24), de sorte que les gaz de réaction sont aptes à être traités directement dans l'installation de réaction du gaz à l'eau (26) sans refroidissement actif intermédiaire.

2. Système (10) selon la revendication 1, **caractérisé en ce que** le système (10) comprend une installation de carbonisation (14) pour la carbonisation hydrothermale continue ou discontinue de biomasse pour produire du charbon, l'installation de carbonisation (14) comprenant en particulier une partie de carbonisation (16), une partie de séchage (18) se raccordant à la partie de carbonisation (16), et un échangeur de chaleur (20), l'échangeur de chaleur (20) conduisant la chaleur de réaction libérée lors de la carbonisation dans la partie de carbonisation (16) vers la partie de séchage (18).

3. Système (10) selon l'une des revendications précédentes, **caractérisé en ce que** la centrale thermique à vapeur (24) est thermiquement couplée à une enveloppe d'eau de refroidissement et en outre à une conduite de dérivation de gaz de réaction du réacteur de gazéification de charbon (22) qui évacue les gaz de réaction du réacteur de gazéification de charbon (22).

4. Système (10) selon l'une des revendications précédentes, **caractérisé en ce qu'**il est prévu une pile à combustible (38) qui est reliée à l'installation de réaction du gaz à l'eau (26) et/ou à l'accumulateur de gaz (28) pour obtenir et consommer au moins l'un des gaz de produit, la pile à combustible (38) étant en particulier une pile à combustible à haute température.

5. Système (10) selon la revendication 4, **caractérisé en ce que** la pile à combustible (38) présente une conduite de dérivation (40) qui est thermiquement couplée à une conduite d'eau d'alimentation (36) de la centrale thermique à vapeur (24).

6. Procédé d'emmagasinage d'hydrogène extrait de charbon au moyen d'un système (10) selon l'une des revendications précédentes, comprenant les étapes suivantes :
- gazéification du charbon dans le réacteur de gazéification de charbon (22) avec de l'eau et de l'oxygène (atmosphérique),
- dérivation de la chaleur de réaction produite lors de la gazéification pour chauffer une chaudière de la centrale thermique à vapeur (24), les gaz de réaction produits lors de la gazéification chauffant l'eau d'alimentation de la chaudière de la centrale thermique à vapeur (24) pour produire du courant électrique, grâce à quoi les gaz de réaction, en raison de la chaleur dérivée, sont refroidis à une température nécessaire pour la réaction du gaz à l'eau,
- production de courant dans la centrale thermique à vapeur (24),
- reconduite des gaz de réaction produits lors de la gazéification dans l'installation de réaction du gaz à l'eau (26),
- réalisation d'une réaction du gaz à l'eau dans l'installation de réaction du gaz à l'eau (26) en conduisant de l'eau en plus des gaz de réaction produits lors de la gazéification dans l'installation de réaction du gaz à l'eau (26), les gaz de réaction du réacteur de gazéification de charbon (22) étant suffisamment refroidis en raison de la chaleur dérivée vers l'eau d'alimentation d'une conduite d'eau d'alimentation de la centrale thermique à vapeur (24), de sorte que les gaz de réaction sont traités directement dans l'installation de réaction du gaz à l'eau (26) sans refroidissement actif intermédiaire,
- reconduction des gaz de produit obtenus lors de la réaction du gaz à l'eau, les gaz de produit reconduits chauffant de l'eau d'alimentation dans une conduite d'eau d'alimentation (36) de l'installation thermique à vapeur (24) de sorte que la chaleur perdue des gaz de produit produits par la réaction du gaz à l'eau est utilisée, et
- emmagasinage d'au moins l'un des gaz de produit dans l'accumulateur de gaz (28).

7. Procédé selon la revendication 6, **caractérisé en ce que** les gaz de réaction de la gazéification comprennent principalement du monoxyde de carbone, les gaz de réaction comprenant en particulier entre autre de l'hydrogène.

8. Procédé selon la revendication 6 ou 7, **caractérisé en ce que** le charbon est fourni à partir de charbon fossile et/ou d'une biomasse quelconque.

9. Procédé selon l'une des revendications 6 à 8, **caractérisé en ce qu'**au moins l'un des gaz de produit est amené vers une pile à combustible (38), en particulier une pile à combustible à haute température, la chaleur perdue de la pile à combustible (38) étant en particulier utilisée pour chauffer de l'eau d'alimentation dans une conduite d'eau d'alimentation (36) de la centrale thermique à vapeur (24).

10. Procédé selon la revendication 9, **caractérisé en ce que** le système (10) comprend une installation de carbonisation (14) pour la carbonisation hydrothermale continue ou discontinue de biomasse, l'installation de carbonisation (14) étant alimentée en biomasse quelconque en tant que matériau de base qui est soumise à une carbonisation hydrothermale continue dans un procédé en continu ou à une carbonisation hydrothermale discontinue dans un procédé par lots, la chaleur de réaction libérée lors de la carbonisation étant en particulier utilisée pour le séchage de la pâte de charbon et d'eau produite.
